# EUROPÄISCHE PATENTSCHRIFT

(11) **EP 2 227 630 B1**
(45) Veröffentlichungstag und Bekanntmachung des Hinweises auf die Patenterteilung: **22.02.2012**
(21) Anmeldenummer: 09700224.0
(22) Anmeldetag: 02.01.2009
(51) Int. Cl.: F02M 31/125, F02M 31/16, F02M 37/00

(54) **VORRICHTUNG UND VERFAHREN ZUR ERWÄRMUNG VON VISKOSEN KRAFTSTOFFEN MIT KRAFTSTOFFRÜCKFÜHRUNG**
DEVICE AND METHOD FOR HEATING VISCOUS FUELS WITH FUEL RECIRCULATION
DISPOSITIF ET PROCÉDÉ DE CHAUFFAGE DE CARBURANTS VISQUEUX AVEC RECYCLAGE DES CARBURANTS

(30) Priorität: 05.01.2008 DE 102008003290
(43) Veröffentlichungstag der Anmeldung: 15.09.2010
(73) Patentinhaber: Konas, Stavros, 22763 Hamburg (DE); Herzog, Siegfried, 21376 Salzhausen (DE)
(72) Erfinder: HERZOG, Siegfried, 21376 Salzhausen (DE)
(74) Vertreter: Thomas, Götz
(86) Internationale Anmeldenummer: PCT/EP2009/000002
(87) Internationale Veröffentlichungsnummer: WO 2009/087073

(56) Entgegenhaltungen:
- WO-A-89/03478
- WO-A-02/064967
- DE-A1- 3 117 374
- DE-A1- 10 060 573
- DE-A1-102007 044 165
- DE-U1-202005 007 712
- DE-U1-202005 008 142
- DE-U1-202008 002 939

## Beschreibung

Die Erfindung betrifft eine Vorrichtung zur Erwärmung von viskosem Kraftstoff, insbesondere Pflanzenöl, für einen Verbrennungsmotor eines Fahrzeugs, insbesondere für einen herkömmlichen Dieselmotor. Die Vorrichtung umfasst mindestens eine mit Kraftstoff aus einem Kraftstofftank beaufschlagbare Kammer, die durch Kraftstoffleitungen mit einer Kraftstoffpumpe und einer Einspritzpumpe des Verbrennungsmotors verbindbar ist, eine elektrische Heizeinrichtung zum Erwärmen von Kraftstoff innerhalb der Kammer und einen mit erwärmter Kühlflüssigkeit aus dem Verbrennungsmotor beaufschlagbaren Wärmetauscher im Wärmetauscherkontakt mit Kraftstoff innerhalb der Kammer, sowie eine in Strömungsrichtung des Kraftstoffs hinter der Kammer abzweigende Kraftstoffrücklaufleitung. Die Erfindung betrifft weiter eine Kraftstoffanlage für einen Verbrennungsmotor eines Fahrzeugs, mit einem Kraftstofftank zur Aufnahme von viskosem Kraftstoff, einer Kraftstoffpumpe zur Förderung des Kraftstoffs aus dem Kraftstofftank zu einer Einspritzpumpe, mindestens einer zwischen der Kraftstoffpumpe und der Einspritzpumpe angeordneten Vorrichtung zur Erwärmung des Kraftstoffs, die eine vom Kraftstoff durchströmte Kammer, eine elektrische Heizeinrichtung zum Erwärmen von Kraftstoff innerhalb der Kammer und einen mit erwärmter Kühlflüssigkeit aus dem Verbrennungsmotor beaufschlagbaren Wärmetauscher im Wärmetauscherkontakt mit Kraftstoff innerhalb der Kammer umfasst, sowie mit mindestens einer in Strömungsrichtung des Kraftstoffs hinter der Kammer abzweigenden Kraftstoffrücklaufleitung. Darüber hinaus betrifft die Erfindung noch ein Verfahren zur Erwärmung von viskosem Kraftstoff vor dessen Zufuhr zu einem Verbrennungsmotor eines Fahrzeugs. Bei dem Verfahren wird der Kraftstoff von einer Kraftstoffpumpe aus einem Kraftstofftank durch eine Kammer hindurch zu einer Einspritzpumpe des Verbrennungsmotors gepumpt und innerhalb der Kammer von einer elektrischen Heizeinrichtung und/oder von einem mit erwärmter Kühlflüssigkeit aus dem Verbrennungsmotor beaufschlagten, im Wärmetauscherkontakt mit Kraftstoff innerhalb der Kammer stehenden Wärmetauscher erwärmt.

Pflanzenöle, wie Rapsöl oder Sonnenblumenöl, weisen eine erheblich höhere Viskosität als Dieselkraftstoff auf und können daher in konventionellen Dieselmotoren von Kraftfahrzeugen nicht ohne weiteres als Kraftstoffe eingesetzt werden. Um den Einsatz von Pflanzenölen als Ersatz für Dieselkraftstoff zu ermöglichen, muss die Viskosität der Pflanzenöle verringert werden, was entweder durch chemische Verfahren, beispielsweise durch eine Veresterung, oder noch einfacher durch Erwärmung der Pflanzenöle vor ihrer Zufuhr in den Verbrennungsmotor erfolgen kann.

Zur Erwärmung von Pflanzenölen vor ihrer Zufuhr in einen Verbrennungsmotor wurde in der WO 02/064967 A1 bereits eine Vorrichtung mit einer von Kraftstoff durchströmten Kammer in einer Kraftstoffzuleitung des Verbrennungsmotors vorgeschlagen, die einen mit einem Kühlmittelkreislauf des Verbrennungsmotors verbindbaren Wärmetauscher und eine elektrische Heizeinrichtung enthält, um den durch die Kammer strömenden Kraftstoff vor der Zufuhr in den Verbrennungsmotor wahlweise durch Stromzufuhr zur Heizeinrichtung bzw. durch Zufuhr von erwärmtem Kühlmittel zum Wärmetauscher zu erwärmen.

Weiter ist aus der DE 20 2005 008 142 U1 bereits eine ähnliche Vorrichtung der eingangs genannten Art als Teil einer Anordnung zur Nutzung von alternativen Treibstoffen, wie Pflanzenöl, in konventionellen selbstzündenden Verbrennungsmotoren bekannt, bei der an Stelle einer einzigen Kammer zwei getrennte Kammern vorgesehen sind, von denen eine die elektrische Heizeinrichtung und die andere den Wärmetauscher enthält. Die DE 20 2005 008 142 U1 offenbart weiter eine Kraftstoffrücklaufleitung, die von der Einspritzpumpe des Verbrennungsmotors zum Kraftstofftank führt. Durch die Kraftstoffrücklaufleitung wird der von der Einspritzpumpe nicht verbrauchte Kraftstoff wieder in den Tank zurück gefördert. Diese Kraftstoffrücklaufleitung ist auch bei konventionellen Dieselmotoren stets vorhanden, ggf. zusammen mit einer weiteren Kraftstoffrücklaufleitung, die aus einem in Strömungsrichtung hinter der Kraftstoffpumpe und vor der Einspritzpumpe angeordneten Überströmventil eines Kraftstofffilters zum Kraftstofftank abzweigt.

Da die Menge des von der Einspritzpumpe durch die Rücklaufleitung in den Kraftstofftank zurückgeführten Kraftstoffs erheblich ist und bis zu 75 % der von der Förderpumpe geförderten Kraftstoffmenge betragen kann, wird bei der aus der DE 20 2005 008 142 U1 bekannten Vorrichtung ein beträchtlicher Teil der für die Erwärmung des Pflanzenöls in der Kammer benötigten elektrischen oder thermischen Energie verschwendet. Dies ist besonders nach einem Kaltstart des Verbrennungsmotors von Nachteil, wenn die zur Erwärmung des Pflanzenöls in der Kammer benötigte Energie ausschließlich von der elektrischen Heizeinrichtung geliefert wird, weil zu diesem Zeitpunkt das Kühlmittel des Verbrennungsmotors noch kalt ist und somit nicht als Energiequelle zur Verfügung steht. Ein hoher Bedarf an elektrischer Energie unmittelbar nach einem Kaltstart kann dazu führen, dass sich die Fahrzeugbatterie über das erwünschte Maß hinaus entleert.

Ausgehend hiervon liegt der Erfindung die Aufgabe zugrunde, eine Vorrichtung und ein Verfahren der eingangs genannten Art dahingehend zu verbessern, dass der thermische Wirkungsgrad der Vorrichtung insbesondere während der Erwärmung des Kraftstoffs mit elektrischer Energie verbessert werden kann.

Diese Aufgabe wird durch die kennzeichnenden Merkmale des Anspruchs 1 gelöst. Dabei wird in der Kammer erwärmter Kraftstoff, der nicht in den Verbrennungsmotor zugeführt wird, mindestens zum Teil durch die Kraftstoffrücklaufleitung in die Kammer zurückgeführt.

Der Erfindung liegt der Gedanke zugrunde, dass durch das Zurückführen des bereits erwärmten überschüssigen Kraftstoffs, d.h. des von der Einspritzpumpe nicht in die Zylinder des Dieselmotors eingespritzten Kraftstoffs, die Menge des insgesamt zu erwärmenden Kraftstoffs und insbesondere die Menge des bei kaltem Dieselmotor mit der elektrischen Heizeinrichtung zu erwärmenden Kraftstoffs bedeutend verringert werden kann, was zu einem erheblich höheren thermischen Wirkungsgrad führt.

Es ist vorgesehen, dass die Einmündung der Kraftstoffrücklaufleitung in die Kammer in der Nähe einer Einmündung einer die Kammer mit der Einspritzpumpe verbindenden Kraftstoffvorlaufleitung angeordnet ist. Die Einmündung der Rücklaufleitung befindet sich in der Nähe der elektrischen Heizeinrichtung in einem Teil der Kammer, der durch eine mit Öffnungen versehene Trennwand vom Rest der Kammer mit dem Wärmetauscher abgetrennt ist, so dass sich der in die Kammer zurückströmende erwärmte Kraftstoff nicht mit dem gesamten Kammerinhalt durchmischt, sondern nur mit einem Teil des Kammerinhalts, der sich in der Nähe der elektrischen Heizeinrichtung befindet. Da auf diese Weise die Menge des Kraftstoffs weiter verringert werden kann, der mittels der elektrischen Heizeinrichtung erwärmt werden muss, kann der thermische Wirkungsgrad der Vorrichtung in der Phase der elektrischen Beheizung weiter verbessert werden.

Es ist bekannt, dass zwei voneinander getrennte, in Strömungsrichtung des Kraftstoffs hintereinander angeordnete Kammern mit der elektrischen Heizeinrichtung bzw. mit dem Wärmetauscher vorgesehen sein können, wie bei der Anordnung aus der DE 20 2005 008 142 U1. Erfindungsgemäß mündet die Rücklaufleitung in die Kammer mit der elektrischen Heizeinrichtung, die in Strömungsrichtung des Kraftstoffs hinter der Kammer mit dem Wärmetauscher angeordnet und durch die Vorlaufleitung mit der Einspritzpumpe verbunden ist.

Während eine Vorrichtung mit zwei Kammern vor allem dort verwendet wird, wo der Platz für den Einbau einer einzigen ausreichend großen Kammer nicht ausreicht, wird ansonsten zur Vereinfachung der Montage die Verwendung einer einzigen Kammer bevorzugt, die gemäß einer vorteilhaften Ausgestaltung der Erfindung zylindrisch geformt ist und zwei entgegengesetzte Stirnenden aufweist, wobei die Rücklaufleitung und die Vorlaufleitung an einem der beiden Stirnenden in die Kammer münden. Die Kammer ist mit der Kraftstoffpumpe über eine Kraftstoffversorgungsleitung verbunden, die zweckmäßig am anderen Stirnende in die Kammer mündet.

Im Fall einer zylindrischen Kammer weist die Trennwand vorzugsweise die Form eines zylindrischen Topfs auf, der die elektrische Heizeinrichtung umgibt und der mit seinem Rand um die Einmündungen der Rücklaufleitung und der Vorlaufleitung herum mit einer Stirnwand der Kammer verbunden ist, wobei sein Boden vorzugsweise geschlossen ist und zum Wärmetauscher und zur gegenüberliegenden Stirnwand der Kammer hin weist, während seine Umfangswand mit den Öffnungen versehen ist, durch die der durch die Kraftstoffversorgungsleitung in die Kammer zugeführte Kraftstoff in den abgetrennten Teil der Kammer und aus diesem zur Vorlaufleitung gelangen kann.

Bevorzugt umfasst der Wärmetauscher eine in die Kammer ragende Rohrschlange, die und derart zwischen der Einmündung der Kraftstoffversorgungsleitung und den Einmündungen der Vorlaufleitung und der Rücklaufleitung angeordnet ist, dass der von der Kraftstoffpumpe in die Kammer geförderte Kraftstoff nach seinem Eintritt in die Kammer zwischen den Windungen des Rohrschlangenwärmetauschers hindurchtritt und erst anschließend in den abgetrennten Teil der Kammer gelangt, in den die Vorlaufleitung und die Rücklaufleitung münden.

Im folgenden wird die Erfindung anhand zweier in der Zeichnung dargestellter Ausführungsbeispiele näher erläutert. Es zeigen:
Fig. 1: eine schematische Ansicht von Teilen einer zur Verbrennung von Pflanzenöl geeigneten Kraftstoffanlage eines Kraftfahrzeug-Dieselmotors mit einer Vorrichtung zum Erwärmen von Kraftstoff;
Fig. 2: eine vergrößerte schematische Darstellung der Vorrichtung zum Erwärmen von Kraftstoff;
Fig. 3: eine Ansicht entsprechend Fig. 1, jedoch von einer etwas modifizierten Kraftstoffanlage.

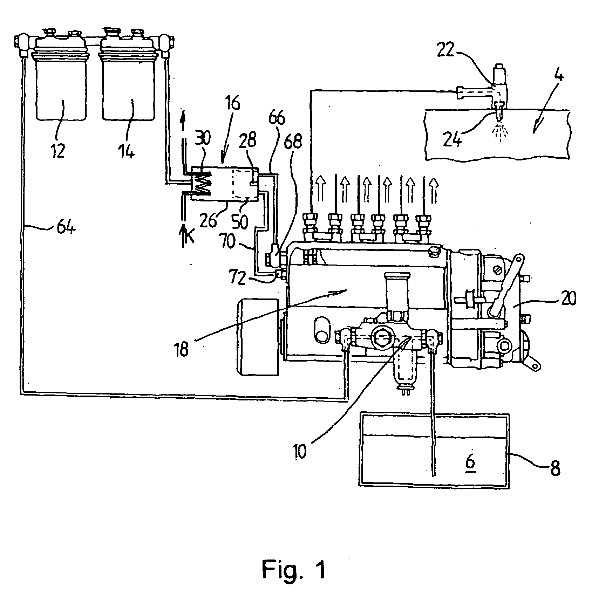

Die in Fig. 1 der Zeichnung dargestellte Kraftstoffanlage 2 eines konventionellen Dieselmotors 4 eines Kraftfahrzeugs umfasst im Wesentlichen einen zur Aufnahme von Pflanzenöl oder von anderen viskosen Kraftstoffen 6 dienenden Kraftstofftank 8, eine Kraftstoffpumpe 10 zum Ansaugen des Kraftstoffs 6 aus dem Kraftstofftank 8, zwei Kraftstofffilter 12, 14 zur Filterung des von der Kraftstoffpumpe 10 geförderten Kraftstoffs 6, eine Vorrichtung 16 zur Erwärmung des Kraftstoffs 6 zur Verminderung seiner Viskosität, eine Einspritzpumpe 18 mit einem Regler 20 sowie Düsenhalter 22 (nur einer dargestellt) mit Einspritzdüsen 24 zum Einspritzen des erwärmten Kraftstoffs in die Zylinder (nicht dargestellt) des Dieselmotors 4.

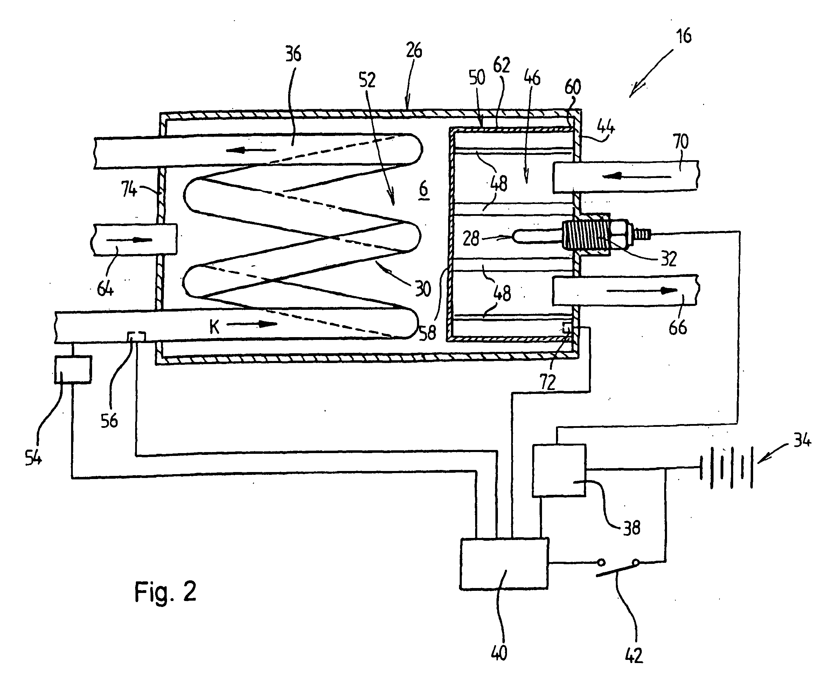

Wie am besten in Fig. 2 dargestellt, weist die Vorrichtung 16 zur Erwärmung des Kraftstoffs 6 eine zylindrische, vom Kraftstoff 6 durchströmte Kammer 26 auf, die eine elektrische Heizeinrichtung 28 und einen Wärmetauscher 30 enthält. Die elektrische Heizeinrichtung 28 umfasst eine Glühkerze 32, die mit Strom aus einer Batterie 34 des Kraftfahrzeugs gespeist werden kann, während der Wärmetauscher 30 eine im Inneren der Kammer 26 vom Kraftstoff 6 umströmte Rohrschlange 36 umfasst, durch die erwärmtes Kühlmittel K aus dem Dieselmotor 4 hindurch geleitet werden kann.

Die Glühkerze 32 ist mit der Fahrzeugbatterie 34 über einen Schalter 38 verbunden, der von einer zentralen Steuerung 40 geschlossen wird, wenn ein Tastschalter 42 manuell betätigt wird. Die an einem Stirnende der zylindrischen Kammer 26 angeordnete Glühkerze 32 ragt aus einer Stirnwand 44 ins Innere eines ersten Kammerteils 46, der durch eine mit Öffnungen 48 versehene Trennwand 50 von einem zweiten, die Rohrschlange 36 enthaltenden Kammerteil 52 getrennt ist.

Die Rohrschlange 36 ist durch ein Sperrventil 54 (Fig. 2) mit einem Kühlmittelkreislauf (nicht dargestellt) des Dieselmotors 4 verbunden. Das Sperrventil 54 wird von der Steuereinheit 40 in Abhängigkeit von der mit einem Thermofühler 56 gemessenen Temperatur des Kühlmittels K im Kühlmittelkreislauf geöffnet bzw. geschlossen.

Die Trennwand 50 besitzt die Form eines zylindrischen Topfs, der einen im Vergleich zum Durchmesser der Kammer 26 geringeren Durchmesser und einen kreisförmigen Boden 58 aufweist und dessen vom Boden 58 abgewandter ringförmiger Rand 60 an der Stirnwand 44 der Kammer 26 befestigt ist. Die Öffnungen 48 sind in axialer Richtung der Kammer 26 ausgerichtete Schlitze, die eine Umfangswand 62 des zylindrischen Topfs über deren gesamte axial Länge durchsetzen.

Wie sich aus Fig. 1 und 2 entnehmen lässt, ist die Vorrichtung 16 an eine Kraftstoffversorgungsleitung 64 angeschlossen, die von der Kraftstoffpumpe 10 über die beiden Kraftstofffilter 10, 12 zur Kammer 26 führt, um diese mit gefiltertem Kraftstoff 6 zu versorgen. Die Vorrichtung 16 ist durch eine Vorlaufleitung 66 mit einem Einlass 68 der Einspritzpumpe 18 verbunden, um erwärmten Kraftstoff 6 aus der Kammer 26 zur Einspritzpumpe 18 zuzuführen. Darüber hinaus ist die Vorrichtung 16 durch eine Rücklaufleitung 70 mit einem Leckkraftstoffauslass 72 der Einspritzpumpe 18 und der Einspritzdüsen 24 verbunden, um den überschüssigen, d.h. den von der Einspritzpumpe 18 nicht in die Zylinder des Dieselmotors 4 eingespritzten erwärmten Kraftstoff in die Kammer 26 statt durch eine Leckkraftstoffleitung in den Kraftstofftank 8 zurückzuführen.

Die Kraftstoffversorgungsleitung 66 mündet an der zur Stirnwand 44 entgegengesetzten Stirnwand 74 in die Kammer 26, wie in Fig. 2 dargestellt. Vor der Einmündung der Leitung 66 ist die Rohrschlange 36 des Wärmetauschers 30 angeordnet, so dass der aus der Kraftstoffversorgungsleitung 66 in die Kammer 26 eintretende Kraftstoff 6 zuerst durch die Windungen der Rohrschlange 36 im zweiten Kammerteil 52 hindurch strömt, bevor er durch die Schlitzöffnungen 48 in den ersten Kammerteil 46 gelangt.

Die Vorlaufleitung 66 und die Rücklaufleitung 70 münden an der Stirnwand 44 nebeneinander oder beiderseits der Glühkerze 32 in den von der topfförmigen Trennwand 50 umschlossenen ersten Kammerteil 46, so dass der aus der Einspritzpumpe 18 durch die Rücklaufleitung 70 in den ersten Kammerteil 46 zurück strömende, bereits erwärmte Kraftstoff überwiegend direkt, d.h. ohne Umweg durch den zweiten Kammerteil 52, an der Glühkerze 32 vorbei zur Einmündung der Vorlaufleitung 66 und durch diese erneut zur Einspritzpumpe 18 geleitet wird, so dass er im Kreislauf zwischen der Kammer 26 und der Einspritzpumpe 18 zirkuliert.

Bei einer Inbetriebnahme des Dieselmotors 4 wird vor dessen Start der elektrischen Heizeinrichtung 28 Strom aus der Fahrzeugbatterie 34 zugeführt, um den Kraftstoff 6 in der Kammer 26 bzw. im ersten Kammerteil 46 zu erwärmen, bis die Viskosität des Kraftstoffs 6 so weit verringert ist, dass dieser ohne Probleme in die Zylinder des Dieselmotors 4 eingespritzt werden kann. Dies ist bei einem aus Pflanzenöl bestehenden Kraftstoff in der Regel dann der Fall, wenn der Kraftstoff im ersten Kammerteil 46 eine Temperatur von 70 bis 90°C erreicht, die beispielsweise mittels eines weiteren Thermofühlers 72 im ersten Kammerteil 46 gemessen und über die Steuerung 40 an ein Motorsteuergerät (nicht dargestellt) des Dieselmotors 4 übermittelt werden kann.

Nach einem anschließenden Start des Dieselmotors 4 wird die elektrische Heizeinrichtung 28 weiterhin mit Strom aus der Fahrzeugbatterie 34 gespeist, um den Kraftstoff zu erwärmen, der als Ersatz für den in die Zylinder eingespritzten Kraftstoff durch die Schlitzöffnungen 48 aus dem zweiten Kammerteil 52 in den ersten Kammerteil 46 nachströmt. Der von der Einspritzpumpe 18 nicht benötigte bereits erwärmte überschüssige Kraftstoff wird von der Einspritzpumpe 18 durch die Rücklaufleitung 70 wieder in den ersten Kammerteil 46 zurückgeleitet, wo er sich mit nachgeströmtem Kraftstoff aus dem zweiten Kammerteil 52 vermischt und zusammen mit diesem durch die Vorlaufleitung 66 erneut zur Einspritzpumpe 18 gefördert wird.

Wenn die vom Thermofühler 56 gemessene Temperatur des Kühlmittels des Dieselmotors einen vorbestimmten Wert erreicht hat, der für die weitere Erwärmung des Kraftstoffs 6 in der Kammer 26 ausreichend ist, zum Beispiel etwa 70 bis 90°C, wird von der Steuerung 40 zum einen mit Hilfe des Schalters 38 die Stromzufuhr zur elektrischen Heizeinrichtung 28 unterbrochen und zum anderen das Sperrventil 54 geöffnet, um das erwärmte Kühlmittel durch die Rohrschlange 36 umzuwälzen. Auf diese Weise wird nun der Inhalt des zweiten Kammerteils 52 durch Wärmetausch mit dem durch die Rohrschlange 36 zirkulierenden Kühlmittel erwärmt, bevor der Kraftstoff 6 in den ersten Kammerteil 46 und von dort durch die Vorlaufleitung 66 zur Einspritzpumpe 18 strömt.

Durch den zuvor beschriebenen Aufbau der Vorrichtung 16 und der Kraftstoffanlage 2 können beim Betrieb des Dieselmotors 4 mit Pflanzenöl oder anderen viskosen Kraftstoffen mehrere Vorteile erzielt werden:

Durch die Rückführung des bereits erwärmten überschüssigen, d.h. nicht von der Einspritzpumpe 18 in die Zylinder eingespritzten Kraftstoffs 6 in die Kammer 26 kann die Menge des zu erwärmenden Kraftstoffs 6 beträchtlich verringert werden, wodurch der Energieverbrauch während der Phase der elektrischen Beheizung des Kraftstoffs 6 in der Kammer 26 verringert und damit die Fahrzeugbatterie 34 geschont werden kann.

Dadurch, dass der bereits erwärmte überschüssige Kraftstoff 6 in den vom zweiten Kammerteil 52 etwas abgetrennten ersten Kammerteil 46 zugeführt wird, wird die Menge des zwischen der Einspritzpumpe 18 und der Kammer 26 zirkulierenden Kraftstoffs 6 verringert, wodurch der Energieverbrauch der elektrischen Heizeinrichtung 28 während der Phase der elektrischen Beheizung des Kraftstoffs 6 in der Kammer 26 weiter verringert werden kann.

Weiter wird durch die Trennwand 50 die Menge des vor dem Start des Dieselmotors 4 von der elektrischen Heizeinrichtung 28 erwärmten Kraftstoffs 6 verringert, da der innerhalb des ersten Kammerteils 46 mit Hilfe der Glühkerze 32 erwärmte Kraftstoff nur zu einem kleinen Teil in den zweiten Kammerteil 52 gelangt. Dadurch wird der Kraftstoff im zweiten Kammerteil 52 während der Phase der elektrischen Beheizung vorwiegend erst bei seinem Eintritt in den ersten Kammerteil 46 erwärmt und wodurch die Menge des elektrisch erwärmten Kraftstoffs 6 verringert wird.

Insgesamt kann dadurch der thermische Wirkungsgrad der Vorrichtung bedeutend verbessert werden.

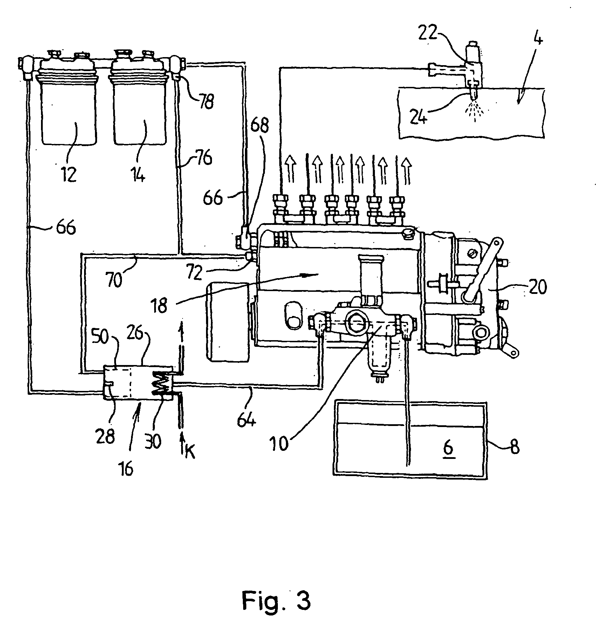

Im Unterschied zu der Kraftstoffanlage aus Fig. 2 ist die zur Erwärmung des Kraftstoffs 6 dienende Vorrichtung 16 bei der in Fig. 3 dargestellten Kraftstoffanlage in Strömungsrichtung des Kraftstoffs vor den beiden Kraftstofffiltern 10, 12 angeordnet, um vor allem bei niedrigen Umgebungstemperaturen ein Zusetzen der Filter 10, 12 durch den viskosen Kraftstoff 6 zu verhindern.

Die Vorrichtung 16 selbst weist denselben Aufbau auf, wie die in Fig. 1 und 2 dargestellte Vorrichtung 16 und ist durch eine in den zweiten Kammerteil 52 mündende Versorgungsleitung 64 direkt mit der Kraftstoffpumpe 10 verbunden. Die Vorlaufleitung 66 führt dort aus dem ersten Kammerteil 46 über die beiden Filter 10, 12 zum Einlass der Einspritzpumpe 68, während die vom Leckkraftstoffauslass 72 der Einspritzpumpe 18 und der Einspritzdüsen 24 in den ersten Kammerteil 46 führende Rücklaufleitung 70 mit einer weiteren Rücklaufleitung 76 verbunden ist, durch die erwärmter Kraftstoff aus einem Überströmventil 78 des zweiten Filters 12 in die Kammer 26 zurückgeführt wird.

## Patentansprüche

1. Vorrichtung zur Erwärmung von viskosem Kraftstoff für einen Verbrennungsmotor eines Fahrzeugs, umfassend mindestens eine mit Kraftstoff aus einem Kraftstofftank beaufschlagbare Kammer, die durch Kraftstoffleitungen mit einer Kraftstoffpumpe und einer Einspritzpumpe des Verbrennungsmotors verbindbar ist, eine elektrische Heizeinrichtung zum Erwärmen von Kraftstoff innerhalb der Kammer, einen mit erwärmter Kühlflüssigkeit aus dem Verbrennungsmotor beaufschlagbaren Wärmetauscher im Wärmetauscherkontakt mit Kraftstoff innerhalb der Kammer, sowie eine in Strömungsrichtung des Kraftstoffs hinter der Kammer abzweigende Kraftstoffrücklaufleitung, **dadurch gekennzeichnet, dass** die Kraftstoffrücklaufleitung (70; 70, 76) und eine von der Kammer (26) zur Einspritzpumpe (18) führende Kraftstoffvorlaufleitung (66) in einen abgetrennten Teil (46) der Kammer (26) münden, in dem die elektrische Heizeinrichtung (28) angeordnet ist.

2. Vorrichtung nach Anspruch 1, **dadurch gekennzeichnet, dass** die elektrische Heizeinrichtung (28) zwischen den Einmündungen der Vorlaufleitung (66) und der Rücklaufleitung (70; 70, 76) angeordnet ist.

3. Vorrichtung nach Anspruch 1 oder 2, **dadurch gekennzeichnet, dass** der Wärmetauscher (30) außerhalb des abgetrennten Teils (46) der Kammer (26) angeordnet ist.

4. Vorrichtung nach einem der vorangehenden Ansprüche, **dadurch gekennzeichnet, dass** eine von der Kraftstoffpumpe (10) zur Kammer (26) führende Kraftstoffversorgungsleitung (64) außerhalb des abgetrennten Teils (46) in die Kammer (26) mündet.

5. Vorrichtung nach einem der vorangehenden Ansprüche, **dadurch gekennzeichnet, dass** die Kammer (26) zwei entgegengesetzte Stirnenden aufweist und dass an einem der beiden Stirnenden die Rücklaufleitung (70; 70, 76) und die Vorlaufleitung (66) münden, während am entgegengesetzten Stirnende eine von der Kraftstoffpumpe (10) zur Kammer (26) führende Kraftstoffversorgungsleitung (64) mündet.

6. Vorrichtung nach einem der vorangehenden Ansprüche, **dadurch gekennzeichnet, dass** der Wärmetauscher (30) zwischen der Einmündung einer von der Kraftstoffpumpe (10) zur Kammer (26) führenden Kraftstoffversorgungsleitung (64) einerseits und den Einmündungen der Vorlaufleitung (66) und der Rücklaufleitung (70; 70, 76) angeordnet ist.

7. Vorrichtung nach einem der vorangehenden Ansprüche, **dadurch gekennzeichnet, dass** der Wärmetauscher (30) eine in die Kammer (26) ragende Rohrschlange (36) umfasst.

8. Vorrichtung nach Anspruch 7, **dadurch gekennzeichnet, dass** die Rohrschlange (36) von dem Kraftstoff (6) umströmt wird, der von der Einmündung der Kraftstoffversorgungsleitung (64) in Richtung der Einmündung der Vorlaufleitung (66) durch die Kammer (26) strömt.

9. Vorrichtung nach einem der vorangehenden Ansprüche, **gekennzeichnet durch** eine den abgetrennten Teil (46) der Kammer (26) begrenzende, mit Öffnungen (48) versehene Trennwand (50).

10. Vorrichtung nach Anspruch 9, **dadurch gekennzeichnet, dass** die Trennwand (50) als einseitig geschlossener zylindrischer Topf ausgebildet und in ihrer Umfangswand (62) mit den Öffnungen (48) versehen ist.

11. Vorrichtung nach Anspruch 10, **dadurch gekennzeichnet, dass** die Öffnungen als axiale Schlitzöffnungen (48) ausgebildet sind.

12. Vorrichtung nach einem der vorangehenden Ansprüche, **dadurch gekennzeichnet, dass** die Kammer (26) zylindrisch ist.

13. Kraftstoffanlage für einen Verbrennungsmotor eines Fahrzeugs, mit einem Kraftstofftank zur Aufnahme von viskosem Kraftstoff, einer Kraftstoffpumpe zur Förderung des Kraftstoffs aus dem Kraftstofftank zu einer Einspritzpumpe, mindestens einer zwischen der Kraftstoffpumpe und der Einspritzpumpe angeordneten Vorrichtung zur Erwärmung des Kraftstoffs, die eine vom Kraftstoff durchströmte Kammer, eine elektrische Heizeinrichtung zum Erwärmen von Kraftstoff innerhalb der Kammer und einen mit erwärmter Kühlflüssigkeit aus dem Verbrennungsmotor beaufschlagbaren Wärmetauscher im Wärmetauscherkontakt mit Kraftstoff innerhalb der Kammer umfasst, sowie mit mindestens einer in Strömungsrichtung des Kraftstoffs hinter der Kammer abzweigenden Kraftstoffrücklaufleitung, **dadurch gekennzeichnet, dass** die Kraftstoffrücklaufleitung (70; 70, 76) und eine von der Kammer (26) zur Einspritzpumpe (18) führende Kraftstoffvorlaufleitung (66) in einen abgetrennten Teil (46) der Kammer (26) münden, in dem die elektrische Heizeinrichtung (28) angeordnet ist.

14. Kraftstoffanlage nach Anspruch 13, **dadurch gekennzeichnet, dass** die Kraftstoffrücklaufleitung (76) hinter einem Kraftstofffilter (10, 12) abzweigt.

15. Verfahren zur Erwärmung von viskosem Kraftstoff vor dessen Zufuhr zu einem Verbrennungsmotor eines Fahrzeugs, bei dem der Kraftstoff von einer Kraftstoffpumpe aus einem Kraftstofftank des Fahrzeugs durch eine Kammer zu einer Einspritzpumpe des Verbrennungsmotors gepumpt und innerhalb der Kammer von einer elektrischen Heizeinrichtung und/oder einem mit erwärmter Kühlflüssigkeit aus dem Verbrennungsmotor beaufschlagten, im Wärmetauscherkontakt mit Kraftstoff innerhalb der Kammer stehenden Wärmetauscher erwärmt wird, **dadurch gekennzeichnet, dass** mindestens ein Teil des in der Kammer (26) erwärmten Kraftstoffs vor oder in der Einspritzpumpe (18) abgezweigt und in einen abgetrennten Teil (46) der Kammer (26) zurückgeführt wird, in dem die elektrische Heizeinrichtung (28) angeordnet ist und in den eine zur Einspritzpumpe (18) führende Kraftstoffvorlaufleitung (66) mündet.

## Claims

1. Device for heating viscous fuel for an internal combustion engine of a vehicle, comprising at least one chamber which can be charged with fuel from a fuel tank and which can be connected by fuel lines to a fuel pump and to an injection pump of the internal combustion engine, an electric heating device for heating fuel within the chamber, a heat exchanger which can be charged with heated cooling liquid from the internal combustion engine and which is in heat-exchanging contact with fuel within the chamber, and a fuel return line which branches off downstream of the chamber in the flow direction of the fuel, **characterized in that** the fuel return line (70; 70, 76) and a fuel feed line (66) which leads from the chamber (26) to the injection pump (18) issue into a partitioned-off part (46) of the chamber (26), in which the electric heating device (28) is arranged.

2. Device according to Claim 1, **characterized in that** the electric heating device (28) is arranged between the issuing-in points of the feed line (66) and the return line (70; 70, 76).

3. Device according to Claim 1 or 2, **characterized in that** the heat exchanger (30) is arranged outside the partitioned-off part (46) of the chamber (26).

4. Device according to one of the preceding claims, **characterized in that** a fuel supply line (64) which leads from the fuel pump (10) to the chamber (26) issues into the chamber (26) outside the partitioned-off part (46).

5. Device according to one of the preceding claims, **characterized in that** the chamber (26) has two opposite face ends and **in that** the return line (70; 70, 76) and the feed line (66) issue at one of the two face ends, while a fuel supply line (64) which leads from the fuel pump (10) to the chamber (26) issues at the opposite face end.

6. Device according to one of the preceding claims, **characterized in that** the heat exchanger (30) is arranged between the issuing-in point of a fuel supply line (64) which leads from the fuel pump (10) to the chamber (26), at one side, and the issuing-in points of the feed line (66) and the return line (70; 70, 76).

7. Device according to one of the preceding claims, **characterized in that** the heat exchanger (30) comprises a pipe coil (36) which projects into the chamber (26).

8. Device according to Claim 7, **characterized in that** the fuel (6) which flows through the chamber (26) from the issuing-in point of the fuel supply line (64) in the direction of the issuing-in point of the feed line (66) flows around the pipe coil (36).

9. Device according to one of the preceding claims, **characterized by** a partition (50) which delimits the partitioned-off part (46) of the chamber (26) and which is provided with openings (48).

10. Device according to Claim 9, **characterized in that** the partition (50) is designed as a cylindrical pot which is closed on one side and which is provided in its circumferential wall (62) with the openings (48).

11. Device according to Claim 10, **characterized in that** the openings are designed as axial slotted openings (48).

12. Device according to one of the preceding claims, **characterized in that** the chamber (26) is cylindrical.

13. Fuel system for an internal combustion engine of a vehicle, having a fuel tank for storing viscous fuel, having a fuel pump for conveying the fuel from the fuel tank to an injection pump, having at least one device, which is arranged between the fuel pump and the injection pump, for heating the fuel, said device comprising a chamber through which the fuel flows, an electric heating device for heating fuel within the chamber, and a heat exchanger which can be charged with heated cooling liquid from the internal combustion engine and which is in heat-exchanging contact with fuel within the chamber, and also having at least one fuel return line which branches off downstream of the chamber in the flow direction of the fuel, **characterized in that** the fuel return line (70; 70, 76) and a fuel feed line (66), which leads from the chamber (26) to the injection pump (18), issue into a partitioned-off part (46) of the chamber (26), in which partitioned-off part the electric heating device (28) is arranged.

14. Fuel system according to Claim 13, **characterized in that** the fuel return line (76) branches off downstream of a fuel filter (10, 12).

15. Method for heating viscous fuel before it is supplied to an internal combustion engine of a vehicle, in which method the fuel is pumped by a fuel pump from a fuel tank of the vehicle through a chamber to an injection pump of the internal combustion engine, and within the chamber, is heated by an electrical heating device and/or by a heat exchanger which is charged with heated cooling liquid from the internal combustion engine and which is in heat-exchanging contact with fuel within the chamber, **characterized in that** at least a part of the fuel heated in the chamber (26) is branched off upstream of or in the injection pump (18) and is recirculated into a partitioned-off part (46) of the chamber (26) in which the electric heating device (28) is arranged and into which issues a fuel feed line (66) which leads to the injection pump (18).

## Revendications

1. Dispositif de chauffage de carburant visqueux pour un moteur à combustion interne de véhicule, comprenant au moins une chambre pouvant être alimentée en carburant provenant d'un réservoir de carburant et pouvant être reliée par des conduites de carburant à une pompe à carburant et à une pompe d'injection du moteur à combustion interne, une installation de chauffage électrique servant à chauffer le carburant à l'intérieur de la chambre, un échangeur thermique pouvant être alimenté en liquide de refroidissement réchauffé provenant du moteur à combustion interne et en contact d'échangeur thermique avec le carburant à l'intérieur de la chambre ainsi qu'une conduite de retour de carburant branchant derrière la chambre dans la direction d'écoulement du carburant, **caractérisé en ce que** la conduite de retour de carburant (70 ; 70, 76) et une conduite d'amenée de carburant (66) allant de la chambre (26) à la pompe d'injection (18) débouchent dans une partie (46) séparée de la chambre (26) dans laquelle l'installation de chauffage électrique (28) est disposée.

2. Dispositif selon la revendication 1, **caractérisé en ce que** l'installation de chauffage électrique (28) est disposée entre les embouchures de la conduite d'amenée (66) et de la conduite de retour (70 ; 70, 76).

3. Dispositif selon la revendication 1 ou 2, **caractérisé en ce que** l'échangeur thermique (30) est disposé à l'extérieur de la partie séparée (46) de la chambre (26).

4. Dispositif selon l'une quelconque des revendications précédentes, **caractérisé en ce qu'**une conduite d'alimentation en carburant (64) allant de la pompe à carburant (10) à la chambre (26) débouche dans la chambre (26) à l'extérieur de la partie (46) séparée.

5. Dispositif selon l'une quelconque des revendications précédentes, **caractérisé en ce que** la chambre (26) comporte deux extrémités frontales opposées et que la conduite de retour (70 ; 70, 76) et la conduite d'amenée (66) débouchent au niveau d'une des deux extrémités frontales tandis qu'une conduite d'alimentation en carburant (64) allant de la pompe à carburant (10) à la chambre (26) débouche au niveau de l'extrémité frontale opposée.

6. Dispositif selon l'une quelconque des revendications précédentes, **caractérisé en ce que** l'échangeur thermique (30) est disposé d'un côté entre l'embouchure d'une conduite d'alimentation en carburant (64) allant de la pompe à carburant (10) à la chambre (26) et les embouchures de la conduite d'amenée (66) et de la conduite de retour (70 ; 70, 76).

7. Dispositif selon l'une quelconque des revendications précédentes, **caractérisé en ce que** l'échangeur thermique (30) comprend un serpentin (36) extérieur saillant dans la chambre (26).

8. Dispositif selon la revendication 7, **caractérisé en ce que** le serpentin (36) est parcouru par le carburant (6) qui s'écoule de l'embouchure de la conduite d'alimentation en carburant (64) en direction de l'embouchure de la conduite d'amenée (66) en passant à travers la chambre (26).

9. Dispositif selon l'une quelconque des revendications précédentes, **caractérisé par** la présence d'une paroi de séparation (50) pourvue d'ouvertures (48) et délimitant la partie séparée (46) de la chambre (26).

10. Dispositif selon la revendication 9, **caractérisé en ce que** la paroi de séparation (50) prend la forme d'un pot cylindrique fermé d'un côté et est pourvue d'ouvertures (48) au niveau de sa paroi périphérique (62).

11. Dispositif selon la revendication 10, **caractérisé en ce que** les ouvertures prennent la forme de fentes ouvertes (48) axiales.

12. Dispositif selon l'une quelconque des revendications précédentes, **caractérisé en ce que** la chambre (26) est cylindrique.

13. Installation de carburant pour un moteur à combustion interne de véhicule, équipée d'un réservoir de carburant conçu pour recevoir du carburant visqueux, d'une pompe à carburant conçue pour transporter le carburant du réservoir de carburant à une pompe d'injection, d'au moins un dispositif de chauffage du carburant disposé entre la pompe à carburant et la pompe d'injection, ledit dispositif comprenant au moins une chambre traversée par le carburant, une installation de chauffage électrique servant à chauffer le carburant à l'intérieur de la chambre et un échangeur thermique pouvant être alimenté en liquide de refroidissement réchauffé provenant du moteur à combustion interne et en contact d'échangeur thermique avec le carburant à l'intérieur de la chambre ainsi que d'au moins une conduite de retour de carburant branchant derrière la chambre dans la direction d'écoulement du carburant, **caractérisée en ce que** la conduite de retour de carburant (70 ; 70, 76) et une conduite d'amenée de carburant (66) allant de la chambre (26) à la pompe d'injection (18) débouchent dans une partie (46) séparée de la chambre (26) dans laquelle l'installation de chauffage électrique (28) est disposée.

14. Installation de carburant selon la revendication 13, **caractérisée en ce que** la conduite de retour de carburant (76) branche derrière un filtre de carburant (10, 12).

15. Procédé de chauffage de carburant visqueux avant son amenée à un moteur à combustion interne de véhicule, dans lequel le carburant est pompé par une pompe à carburant d'un réservoir de carburant du véhicule à une pompe d'injection du moteur à combustion interne en passant à travers une chambre puis réchauffé à l'intérieur de la chambre par une installation de chauffage électrique et/ou un échangeur thermique alimenté en liquide de refroidissement réchauffé provenant du moteur à combustion interne et placé en contact d'échangeur thermique avec le carburant à l'intérieur de la chambre, **caractérisé en ce qu'**au moins une partie du carburant réchauffé dans la chambre (26) est branchée avant ou dans la pompe d'injection (18) et ramenée dans une partie (46) séparée de la chambre (26) dans laquelle l'installation de chauffage électrique (28) est disposée et dans laquelle débouche une conduite d'amenée de carburant (66) conduisant à la pompe d'injection (18).
